# EUROPÄISCHE PATENTSCHRIFT

(11) **EP 3 444 865 B1**
(45) Veröffentlichungstag und Bekanntmachung des Hinweises auf die Patenterteilung: **01.04.2020**
(21) Anmeldenummer: 18171053.4
(22) Anmeldetag: 07.05.2018
(51) Int. Cl.: H01M 2/12

(54) **BATTERIEMODUL UND FAHRZEUG MIT DEM BATTERIEMODUL**
BATTERYMODULE AND CAR WITH BATTERY MODULE
BATTERYMODULE ET VOITURE AVEC MODULE DE BATTERIE

(30) Priorität: 16.08.2017 DE 102017214289
(43) Veröffentlichungstag der Anmeldung: 20.02.2019
(73) Patentinhaber: Robert Bosch GmbH, 70442 Stuttgart (DE)
(72) Erfinder: Kohlrausch, Philipp, 70180 Stuttgart (DE); Zielke, Christian, 72800 Eningen Unter Achalm (DE); Dackermann, Tim, 72072 Tuebingen (DE)

(56) Entgegenhaltungen:
- DE-A1-102010 039 976
- DE-A1-102014 202 635
- DE-A1-102014 208 062
- US-A1- 2013 095 356

## Beschreibung

Die vorliegende Erfindung betrifft ein Batteriemodul und ein Fahrzeug mit dem Batteriemodul.

### Stand der Technik

Das Dokument EP 2 532 039 A1 offenbart eine Batteriezelle mit einem Sicherheitsventil zur Entlüftung der Batteriezelle.

Das Dokument US 2010/0173181 A1 offenbart ein Batteriesystem mit rechteckigen Batteriezellen und Gasabführkanälen, wobei die Gasabführkanäle mit den Sicherheitsventilen der Batteriezellen verbunden sind.

Das Dokument DE 10 2014 208 062 offenbart ein Batteriesystem umfassend eine Mehrzahl von Batteriezellen, die jeweils eine Entgasungsöffnung aufweisen.

Das Dokument DE 10 2014 202 635 offenbart eine Batteriezelle umfassend eine Zellentgasungsöffnung mit einem temperatursensitiven Teil

Die Aufgabe der vorliegenden Erfindung ist es, die Sicherheit eines Batteriemoduls bei einer überhitzten Batteriezelle zu erhöhen.

### Offenbarung der Erfindung

Die vorliegende Erfindung betrifft ein Batteriemodul mit mindestens zwei Batteriezellen, insbesondere im Wesentlichen zylindrisch ausgestalteten Batteriezellen beziehungsweise Rundzellen. Die Batteriezellen weisen jeweils mindestens ein Sicherheitsventil zur Entlüftung der Batteriezelle auf. Das Sicherheitsventil der Batteriezelle ist jeweils an einer Stirnseite der Batteriezelle zu einem Hohlraum des Batteriemoduls hin gerichtet angeordnet. Es kann insbesondere vorgesehen sein, pro zylindrischer Batteriezelle an jeder Stirnseite ein Sicherheitsventil anzuordnen. Jede Batteriezelle weist an dem mindestens einen Sicherheitsventil der Batteriezelle einen separaten Hohlraum auf. Der Hohlraum ist jeweils durch die Batteriezelle, ein Dichtelement und eine Membran begrenzt. Ein Teil der Membran ist dazu eingerichtet, durch einen Überdruck im Hohlraum geöffnet zu werden. Durch das erfindungsgemäße Batteriemodul entsteht der Vorteil, dass bei einer Entlüftung beziehungsweise einer Überhitzung einer Batteriezelle ein aus dem Sicherheitsventil der Batteriezelle austretendes heißes Gas an eine Umgebung des Batteriemoduls abgeleitet wird, wobei das heiße Gas der überhitzten Batteriezelle nicht in einen gut wärmeleitenden Kontakt mit benachbarten Batteriezellen gelangt. Die Membrane begrenzt an mindestens zwei separate Hohlräume.

Dadurch kann vorteilhafterweise eine Membran zur Abdichtung beziehungsweise Begrenzung der mindestens zwei Hohlräume angeordnet werden. Diese Ausgestaltung ist kostengünstig. Die Membran des Weiteren weist an mindestens einer Stelle eine Sollberststelle auf.

Die Membran ist vorteilhafterweise mittels der Sollberststelle dazu eingerichtet, durch einen definierten Überdruck im Hohlraum und an einer definierten Membranstelle geöffnet zu werden.

Die Membran weist eine elektrische Schaltung auf. Die elektrische Schaltung ist dazu eingerichtet, durch eine geöffnete Sollberststelle verändert zu werden. Anschließend kann eine Ermittlung der Position der geöffneten Sollberststelle in Abhängigkeit der Veränderung der elektrischen Schaltung durchgeführt werden, beispielsweise erfolgt die Ermittlung der Position in Abhängigkeit einer Widerstandsänderung in der elektrischen Schaltung. Durch diese Weiterführung entsteht der Vorteil einer leichten Reparatur des Batteriemoduls. Beispielsweise kann eine Position einer defekten Batteriezelle einfach ermittelt und die defekte Batteriezelle folglich leicht ausgetauscht werden.

In einer Ausgestaltung weist die Membran eine Elastomerschicht und eine Metallschicht auf. Durch die Elastomerschicht kann die Membran beispielsweise zur Abdichtung des Hohlraums verpresst werden. Die Metallschicht kann beispielsweise zur Versteifung der Elastomerschicht und/oder zur Wärmeableitung beziehungsweise Kühlung vorgesehen sein. Es kann alternativ auch vorteilhafterweise vorgesehen sein, dass die Membran nur ein Elastomer oder nur ein Metall aufweist.

In einer weiteren Ausgestaltung ist die Membran an einem Batteriezellhalter fixiert, wobei der Batteriezellhalter zur Aufnahme der Batteriezellen eingerichtet und das Dichtelement an dem Batteriezellhalter ausgestaltet ist. Der Batteriezellhalter weist folglich das Dichtelement auf. Durch diese Ausgestaltung kann vorteilhafterweise auf die Anordnung eines zusätzlichen Dichtelements verzichtet werden.

In einer Weiterbildung ist ein Gaskanal zwischen der Batteriezelle und der Umgebung des Batteriemoduls angeordnet. Der Gaskanal ist dazu eingerichtet, bei einer Entlüftung der Batteriezelle den aus der Batteriezelle durch die geöffnete Membran austretenden Gasstrom an die Umgebung zu kanalisieren. Durch diese Weiterbildung wird das Gas vorteilhafterweise auf einem definierten Weg an die Umgebung abgeleitet.

Es kann des Weiteren vorgesehen sein, das der Gaskanal mindestens zwei Kanalteilstücke aufweist. Zwischen den zwei Kanalteilstücken ist vorzugsweise mindestens ein Kanalventil angeordnet. Durch diese Ausführung wird die Verteilung des heißen Gases in dem Batteriemodul vorteilhafterweise reduziert und das Gas zielgerichtet und auf schnellstem Wege abgeleitet, so dass das heiße Gas nicht unnötig das Batteriemodul erhitzt.

Das Kanalventil ist in einer bevorzugten Ausgestaltung dazu eingerichtet ist, durch einen Überdruck in einem Kanalteilstück geöffnet zu werden. Dadurch entsteht der Vorteil, dass das Kanalventil bei einer Entlüftung einer Batteriezelle automatisch geöffnet wird.

Das Kanalventil ist in einer besonders bevorzugten Ausgestaltung eine Berstmembran. Durch diese Ausgestaltung wird das Kanalventil kostengünstig und zuverlässig realisiert.

In einer Weiterbildung ist vorgesehen, das Kanalventil mit einer elektrischen Schaltung zu verbinden, wobei eine Position eines geöffneten Kanalventils mittels der elektrischen Schaltung elektrisch ermittelt wird.

In einer optionalen oder alternativen Ausgestaltung weist der Gaskanal mindestens ein Verschlussventil auf. Das Verschlussventil ist dazu eingerichtet, wenigstens ein Kanalteilstück in Abhängigkeit einer Strömung im Gaskanal und/oder einer Temperatur im Gaskanal zu verschließen. Beispielsweise kann das Verschlussventil als Klappe ausgestaltet sein. Dadurch entsteht der Vorteil, dass das heiße Gas auf kürzestem Wege durch den Gaskanal an die Umgebung kanalisiert und nicht in dem Batteriemodul verteilt wird.

Die Erfindung betrifft des Weiteren ein Fahrzeug mit einem erfindungsgemäßen Batteriemodul.

Die vorliegende Erfindung wird nachfolgend anhand bevorzugter Ausführungsformen und beigefügter Zeichnungen erläutert.
Figur 1: Batteriemodul im Querschnitt
Figur 2: Membran mit Sollberststellen und elektrischer Schaltung

### Ausführungsbeispiele

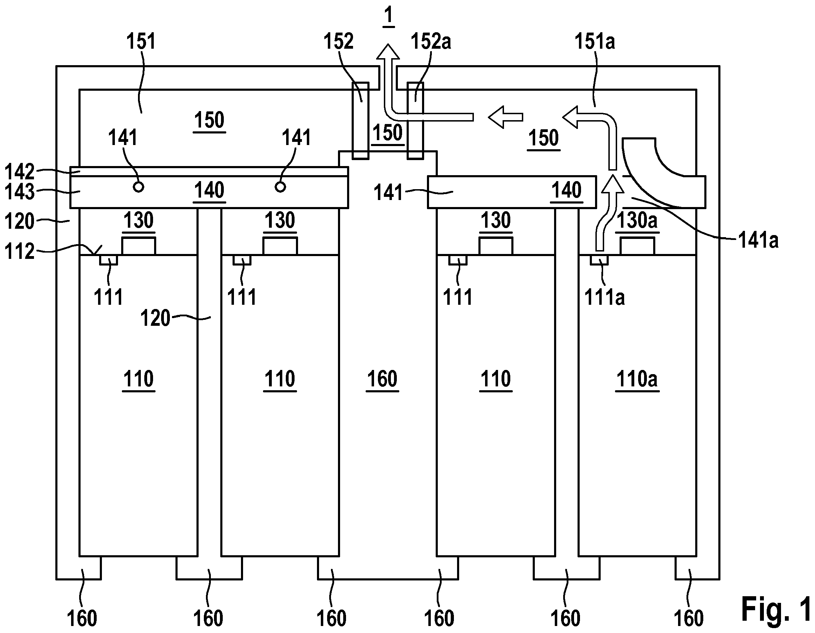

In Figur 1 ist ein Batteriemodul 100 im Querschnitt dargestellt. Das Batteriemodul 100 weist vier Batteriezellen 110 und 110a auf. Jede Batteriezelle 110 und 110a weist mindestens ein Sicherheitsventil 111 auf. Die Sicherheitsventile 111 sind bevorzugt an jeweils einer Stirnseite der Batteriezellen 110 und 110a angeordnet. Bei einer überhöhten Temperatur einer Batteriezelle 110a werden durch chemische Reaktionen Gase erzeugt, wodurch ein Überdruck im Inneren der Batteriezelle 110a entsteht. Um den Überdruck in der Batteriezelle 110a abzubauen, ist das Sicherheitsventil 111 der Batteriezelle 110a dazu eingerichtet, ab einem Druckschwellenwert durch den Überdruck geöffnet zu werden. Bei einem geöffneten Sicherheitsventil 111 tritt folglich heißes Gas aus der Batteriezelle 110a aus. Erfindungsgemäß tritt das heiße Gas in einen Hohlraum 130 aus, welcher durch die Batteriezelle 110 beziehungsweise 110a, ein Dichtelement 120 und eine Membran 140 begrenzt ist. Das Dichtelement 120 ist in diesem Beispiel als Teil des Batteriezellhalters 160 ausgeführt. Des Weiteren ist die Membran 140 in dem Batteriezellhalter 160 über mehrere Batteriezellen 110 und 110a hinweg in dem Batteriezellhalter 160 eingelegt und beispielsweise durch Pressung fixiert. Zumindest ein Teil der Membran 140 ist dazu eingerichtet, durch einen Überdruck in dem Hohlraum 130 geöffnet zu werden. Die Membran 140 weist dazu Sollberststellen 141 auf, welche bei einem definierten Überdruck in dem Hohlraum 130 geöffnet werden beziehungsweise bersten. Die Membran 140 entspricht damit einem zweiten Überdruckventil. Die Membran 140 wird folglich nur oberhalb einer überhitzten Batteriezelle 110 bzw. 110a geöffnet.

Auf einer zur Batteriezelle 110 und 110a und zum Hohlraum 130 gegenüberliegenden Seite der Membran 140 weist das Batteriemodul 100 einen Gaskanal 150 auf. Der Gaskanal 150 verbindet die Batteriezellen 110 und 110a mit der Umgebung 1 des Batteriemoduls 100. Im Beispiel aus Figur 1 ist die rechte Batteriezelle 110a durch einen inneren Kurzschluss überhitzt. Der Gasdruck im Inneren der Batteriezelle 110a hat das Sicherheitsventil lila geöffnet. Das aus der rechten Batteriezelle 110a ausgetretenen Gas hat den Druck im Hohlraum 130a oberhalb der rechten Batteriezelle 110a erhöht, wodurch die Sollberststelle 141 geöffnet wurde. Das aus der Batteriezelle 110a beziehungsweise dem Hohlraum 130a austretenden Gas wird durch ein Kanalteilstück 151a des Gaskanals 150 an die Umgebung 1 abgeführt beziehungsweise abgeleitet. In dem Kanalteilstück 151a ist ein Kanalventil 152 angeordnet. Das Kanalventil 152 ist eine Berstmembran. Durch das Gas in dem Kanalteilstück 151a wird ein Überdruck erzeugt und das Kanalventil 152a geöffnet, wobei das linke Kanalventil 152 geschlossen bleibt. Durch diese Ausgestaltung wird das heiße Gas aus der Batteriezelle 110 auf direktem Wege an die Umgebung 1 geleitet, ohne dass die benachbarten Batteriezellen 110 mit dem heißen Gas in direkten thermischen Kontakt kommen. Die Kanalventile 152 und 152a öffnen bevorzugt bei einem Überdruck unterhalb des Schwellenwertes zur Öffnung der Membran 140, so dass in dem Kanal 150 kein Druck größer dem Schwellenwert zur Öffnung der Membran 140 aufgebaut wird.

In einer alternativen Ausgestaltung weist jede Batteriezelle 110 zwei Sicherheitsventile 111 an jeweils einer Stirnseite 112 auf. In dieser Ausgestaltung sind pro Batteriezelle 110 zwei Hohlräume 130 und zwei Membranen 140 sowie zwei Gaskanäle 150 vorgesehen.

In einer optionalen oder alternativen Ausgestaltung weist der Gaskanal 150 mindestens ein Verschlussventil auf. Das Verschlussventil ist dazu eingerichtet, wenigstens ein Kanalteilstück 151 in Abhängigkeit einer Strömung im Gaskanal 150 und/oder einer Temperatur im Gaskanal 150 zu verschließen. Das Verschlussventil kann beispielsweise eine Klappe aufweisen, welche in Abhängigkeit einer Strömung im Gaskanal 150 verschlossen wird. Tritt beispielsweise durch eine überhitzte Batteriezelle 110a heißes Gas aus der Batteriezelle 110a in das Kanalteilstück 151a aus, wird eine Gasströmung durch das Kanalteilstück 151a bzw. in dem Gaskanal 150 bis zur Umgebung 1 erzeugt, wobei die Strömung beispielsweise zum Verschließen einer Klappe als Verschlussventil im Gaskanal genutzt wird. Durch ein geschlossenes Verschlussventil werden nicht vom Gasaustritt betroffene Kanalteilstücke 151 nicht mit dem heißen Gas geflutet, wodurch ein reduzierter Temperaturanstieg in dem Batteriemodul 100 bzw. der benachbarten Batteriezellen 110 resultiert. Das Verschlussventil kann alternativ beispielsweise zuschmelzen, wenn heißes Gas das Verschlussventil kontaktiert.

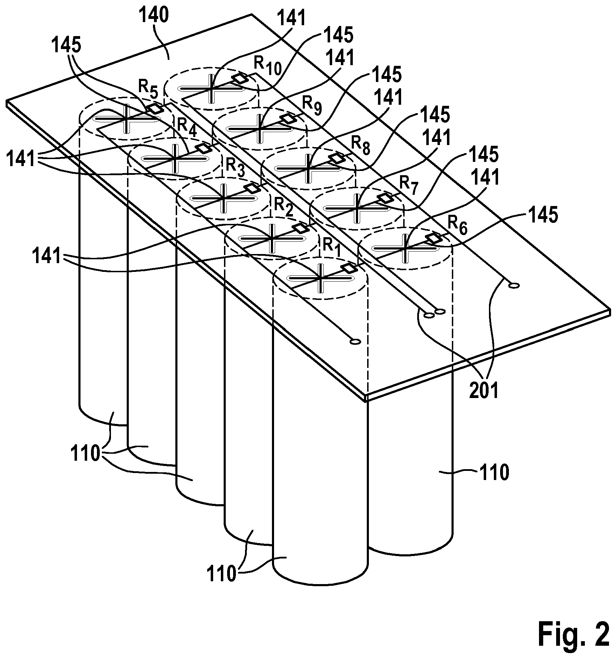

In der Figur 2 sind zehn Batteriezellen 110 schematisch dargestellt, wobei oberhalb der Batteriezellen 110 eine Membran 140 angeordnet ist. Die Membran 140 ist dazu eingerichtet, in einem erfindungsgemäßen Batteriemodul 100 angeordnet zu werden. Die Membran 140 weist Sollberststellen 141 auf. Die Sollberststellen 141 sind jeweils dazu eingerichtet, ab einem definierten Überdruck zu bersten, beispielsweise ab 1,5 bar. Die Membran 140 weist optional eine elektrische Schaltung 201 auf. Die elektrische Schaltung 201 kann beispielsweise elektrische Widerstände R₁, R₂, R₃ bis Rio aufweisen, wobei sich die elektrischen Widerstände R₁, R₂, R₃ bis R₁₀ bevorzugt zumindest geringfügig voneinander unterscheiden. Die elektrischen Widerstände R₁, R₂, R₃ bis R₁₀ sind beispielsweise mittels elektrischer Zuleitungen 145 mit der elektrischen Schaltung 201 verbunden, wobei die Zuleitungen 145 direkt über die Sollbeststellen 141 verlaufen, so dass die Zuleitung 145 bei einer geöffneten Sollberststelle 141 durchtrennt wird. Durch eine durchtrennte Zuleitung 145 verändert sich der elektrische Gesamtwiderstand der elektrischen Schaltung 201. Die Position der überhitzen Batteriezelle 110 kann in Abhängigkeit des elektrische Widerstands beziehungsweise der Widerstandsänderung der elektrischen Schaltung 201 ermittelt werden.

Der Gaskanal 150 kann in einer Weiterführung einen Ventilator aufweisen, wobei der Ventilator dazu eingerichtet ist, eine Strömung in dem Gaskanal 150 zu erzeugen. Durch die Strömung in dem Gaskanal 150 kann die Abführung eines heißen Gases beschleunigt werden. Das Batteriemodul 100 weist optional einen Temperatursensor auf, wobei der Ventilator in Abhängigkeit einer mittels des Temperatursensors erfassten Temperatur angesteuert wird.

## Patentansprüche

1. Batteriemodul (100), aufweisend
• mindestens zwei Batteriezellen (110) mit jeweils mindestens einem Sicherheitsventil (111) zur Entlüftung der Batteriezelle (110), wobei das Sicherheitsventil (111) der Batteriezelle (110) jeweils an einer Stirnseite (112) der Batteriezelle (110) zu einem Hohlraum (130) hin gerichtet angeordnet ist, wobei
• jede Batteriezelle (110) an dem Sicherheitsventil (111) der Batteriezelle (110) einen separaten Hohlraum (130) aufweist,
**dadurch gekennzeichnet, dass**
• der Hohlraum (130) durch die Batteriezelle (110), ein Dichtelement (120, 160) und eine Membran (140) begrenzt ist,
• ein Teil der Membran (140) dazu eingerichtet ist, durch einen Überdruck im Hohlraum (130) geöffnet zu werden,
• die Membran (140) an mindestens zwei separaten Hohlräumen (130) angeordnet ist,
• die Membran (140) an mindestens einer Stelle (141) eine Sollberststelle (141) aufweist, und
• die Membran (140) eine elektrische Schaltung (201) aufweist, wobei die elektrische Schaltung (201) dazu eingerichtet ist, durch geöffnete Sollberststellen (141) verändert zu werden, wodurch die geöffnete Sollberststelle (141) elektrisch ermittelt werden kann.

2. Batteriemodul (100) nach Anspruch 1, **dadurch gekennzeichnet, dass** die Membran (140) eine Elastomerschicht (143) zur Abdichtung des Hohlraums (130) und eine Metallschicht zur Versteifung (142) der Elastomerschicht (143) aufweist.

3. Batteriemodul (100) nach einem der vorhergehenden Ansprüche, **dadurch gekennzeichnet, dass** die Membran (140) an einen Batteriezellhalter (160) fixiert ist, wobei der Batteriezellhalter (160) zur Aufnahme der Batteriezellen (110) eingerichtet und das Dichtelement (120) an dem Batteriezellhalter (160) ausgestaltet ist.

4. Batteriemodul (100) nach einem der vorhergehenden Ansprüche, **dadurch gekennzeichnet, dass**
• ein Gaskanal (150) zwischen der Batteriezelle (110) und der Umgebung (1) angeordnet ist, wobei der Gaskanal (150) dazu eingerichtet ist, bei einer Entlüftung der Batteriezelle (110) den austretenden Gasstrom an die Umgebung (1) zu kanalisieren.

5. Batteriemodul (100) nach Anspruch 4, **dadurch gekennzeichnet, dass** der Gaskanal (150) mindestens zwei Kanalteilstücke (151) aufweist, wobei zwischen zwei Kanalteilstücken (151) mindestens ein Kanalventil (152) angeordnet ist.

6. Batteriemodul (100) nach Anspruch 5, **dadurch gekennzeichnet, dass** das Kanalventil (152) dazu eingerichtet ist, durch einen Überdruck in einem Kanalteilstück (151) geöffnet zu werden.

7. Batteriemodul (100) nach Anspruch 6, **dadurch gekennzeichnet, dass** das Kanalventil (152) eine Berstmembran ist.

8. Batteriemodul (100) nach einem der Ansprüche 5 bis 7, **dadurch gekennzeichnet, dass** das Kanalventil (152) Teil einer elektrischen Schaltung ist, wobei eine Position eines geöffneten Kanalventils (152) mittels der elektrischen Schaltung elektrisch ermittelt wird.

9. Batteriemodul (100) nach einem der Ansprüche 4 bis 8, **dadurch gekennzeichnet, dass** der Gaskanal (150) mindestens ein Verschlussventil aufweist, wobei das Verschlussventil dazu eingerichtet ist, wenigstens ein Kanalteilstück in Abhängigkeit einer Strömung im Gaskanal (150) und/oder einer Temperatur im Gaskanal (150) zu verschließen.

10. Fahrzeug mit einem Batteriemodul (100) nach einem der Ansprüche 1 bis 9.

## Claims

1. Battery module (100), having
• at least two battery cells (110) each with at least one safety valve (111) for venting the battery cell (110), wherein the safety valve (111) of the battery cell (110) is arranged in a manner directed towards a cavity (130) on an end side (112) of the battery cell (110) in each case, wherein
• each battery cell (110) has a separate cavity (130) on the safety valve (111) of the battery cell (110), **characterized in that**
• the cavity (130) is delimited by the battery cell (110), a sealing element (120, 160) and a membrane (140),
• a portion of the membrane (140) is designed to be opened by an excess pressure in the cavity (130),
• the membrane (140) is arranged on at least two separate cavities (130),
• the membrane (140) has a predetermined rupture point (141) at at least one point (141), and
• the membrane (140) has an electrical circuit (201), wherein the electrical circuit (201) is designed to be changed by opened predetermined rupture points (141), as a result of which the opened predetermined rupture point (141) can be electrically determined.

2. Battery module (100) according to Claim 1, **characterized in that** the membrane (140) has an elastomer layer (143) for sealing off the cavity (130) and has a metal layer (142) for reinforcing the elastomer layer (143).

3. Battery module (100) according to either of the preceding claims, **characterized in that** the membrane (140) is fixed to a battery cell holder (160), wherein the battery cell holder (160) is designed for accommodating the battery cells (110) and the sealing element (120) is formed on the battery cell holder (160).

4. Battery module (100) according to one of the preceding claims, **characterized in that**
• a gas duct (150) is arranged between the battery cell (110) and the surrounding area (1), wherein the gas duct (150) is designed to channel the emerging gas stream to the surrounding area (1) when the battery cell (110) is being vented.

5. Battery module (100) according to Claim 4, **characterized in that** the gas duct (150) has at least two duct sections (151), wherein at least one duct valve (152) is arranged between two duct sections (151).

6. Battery module (100) according to Claim 5, **characterized in that** the duct valve (152) is designed to be opened by an excess pressure in a duct section (151) .

7. Battery module (100) according to Claim 6, **characterized in that** the duct valve (152) is a rupture membrane.

8. Battery module (100) according to one of Claims 5 to 7, **characterized in that** the duct valve (152) is part of an electrical circuit, wherein a position of an opened duct valve (152) is electrically determined by means of the electrical circuit.

9. Battery module (100) according to one of Claims 4 to 8, **characterized in that** the gas duct (150) has at least one closure valve, wherein the closure valve is designed to close at least one duct section depending on a flow in the gas duct (150) and/or a temperature in the gas duct (150).

10. Vehicle comprising a battery module (100) according to one of Claims 1 to 9.

## Revendications

1. Module de batterie (100) présentant :
- au moins deux cellules de batterie (110) comprenant chacune au moins une soupape de sécurité (111) pour le désaérage de la cellule de batterie (110), la soupape de sécurité (111) de la cellule de batterie (110) étant disposée de manière orientée vers une cavité (130) à chaque fois au niveau d'un côté frontal (112) de la cellule de batterie (110),
- chaque cellule de batterie (110) présentant, au niveau de la soupape de sécurité (111) de la cellule de batterie (110), une cavité séparée (130),
**caractérisé en ce que**
- la cavité (130) est limitée par la cellule de batterie (110), un élément d'étanchéité (120, 160) et une membrane (140),
- une partie de la membrane (140) est prévue pour être ouverte par une surpression dans la cavité (130),
- la membrane (140) est disposée au niveau d'au moins deux cavités séparées (130),
- la membrane (140) présente, au niveau d'au moins un emplacement (141), une zone d'éclatement de consigne (141), et
- la membrane (140) présente un circuit électrique (201), le circuit électrique (201) étant prévu pour être varié par des zones d'éclatement de consigne ouvertes (141) de telle sorte que la zone d'éclatement de consigne ouverte (141) puisse être détectée par voie électrique.

2. Module de batterie (100) selon la revendication 1, **caractérisé en ce que** la membrane (140) présente une couche élastomère (143) pour l'étanchéité de la cavité (130) et une couche métallique (142) pour le renforcement de la couche élastomère (143).

3. Module de batterie (100) selon l'une quelconque des revendications précédentes, **caractérisé en ce que** la membrane (140) est fixée à un support de cellule de batterie (160), le support de cellule de batterie (160) étant prévu pour recevoir les cellules de batterie (110) et l'élément d'étanchéité (120) étant configuré sur le support de cellule de batterie (160).

4. Module de batterie (100) selon l'une quelconque des revendications précédentes, **caractérisé en ce**
- **qu'**un canal de gaz (150) est disposé entre la cellule de batterie (110) et l'environnement (1), le canal de gaz (150) étant prévu pour canaliser le flux de gaz sortant au niveau de l'environnement (1) dans le cas d'un désaérage de la cellule de batterie (110).

5. Module de batterie (100) selon la revendication 4, **caractérisé en ce que** le canal de gaz (150) présente au moins deux pièces partielles de canal (151), au moins une soupape de canal (152) étant disposée entre deux pièces partielles de canal (151) .

6. Module de batterie (100) selon la revendication 5, **caractérisé en ce que** la soupape de canal (152) est prévue pour être ouverte par une surpression dans une pièce partielle de canal (151).

7. Module de batterie (100) selon la revendication 6, **caractérisé en ce que** la soupape de canal (152) est une membrane d'éclatement.

8. Module de batterie (100) selon l'une quelconque des revendications 5 à 7, **caractérisé en ce que** la soupape de canal (152) fait partie d'un circuit électrique, une position d'une soupape de canal (152) ouverte étant déterminée par voie électrique au moyen du circuit électrique.

9. Module de batterie (100) selon l'une quelconque des revendications 4 à 8, **caractérisé en ce que** le canal de gaz (150) présente au moins une soupape de fermeture, la soupape de fermeture étant prévue pour fermer au moins une pièce partielle de canal en fonction d'un écoulement dans le canal de gaz (150) et/ou d'une température dans le canal de gaz (150) .

10. Véhicule comprenant un module de batterie (100) selon l'une quelconque des revendications 1 à 9.
